# EUROPÄISCHE PATENTSCHRIFT

(11) **EP 3 017 684 B1**
(45) Veröffentlichungstag und Bekanntmachung des Hinweises auf die Patenterteilung: **03.04.2019**
(21) Anmeldenummer: 15191654.1
(22) Anmeldetag: 27.10.2015
(51) Int. Cl.: A01D 90/02

(54) **ZINKENRINGSEGMENT**
TINE RING SEGMENT
ÉLÉMENT D'ANNEAU DENTÉ

(30) Priorität: 04.11.2014 DE 102014116083
(43) Veröffentlichungstag der Anmeldung: 11.05.2016
(73) Patentinhaber: CLAAS Saulgau GmbH, 88348 Bad Saulgau (DE)
(72) Erfinder: Geng, Manfred, 88348 Bad Saulgau (DE); Sauter, Stefan, 88529 Zwiefalten (DE)

(56) Entgegenhaltungen:
- EP-A1- 2 140 753
- DE-A1- 10 017 984
- DE-U1- 9 316 378
- DE-U1-202013 008 355

## Beschreibung

Die Erfindung betrifft ein gemäß dem Oberbegriff des Anspruchs 1 ausgebildetes Zinkenringsegment für einen Rotor einer landwirtschaftlichen Arbeitseinrichtung.

Landwirtschaftliche Arbeitseinrichtungen wie Maisgebisse, Pressen oder Ladewagen verfügen über diverse Rotoren zum Fördern und/oder Schneiden von insbesondere stengelartigem Erntegut. Ein solcher Rotor umfasst eine kreiszylindrische Basistrommel, auf deren Mantelfläche mehrere Zinkenringe axial der Basistrommel voneinander beabstandet befestigt sind. Die Zinkenringe können dabei aus mehreren miteinander in Zinkenringsegmentverbindung stehenden bzw. verbundenen Zinkenringsegmenten bestehen.

EP 2 140 753 A1 offenbart eine Fördereinrichtung für eine landwirtschaftliche Maschine, wie beispielsweise eine Ballenpresse oder einen Selbstladewagen, mit einem drehbaren Rotor, einer Vielzahl koaxialer Ringe, die an dem Rotor angebracht sind, wobei jeder Ring aus wenigstens zwei lösbar verbundenen Ringsegmenten zusammengesetzt ist, wobei wenigstens ein Ringsegment mit wenigstens einer Zinke versehen ist, und mit stationär positionierten Messern und Halteelementen zum Zusammenwirken mit den Zinken des sich drehenden Rotors, wobei wenigstens ein Ringsegment des Rings mit wenigstens zwei Zinken versehen ist, die an dem Ringsegment in Ebenen angeordnet sind, die in der Richtung der Ringachse voneinander beabstandet sind.

Aus DE 20 2013 008 355 U1 ist ein solcher Zinkenring bekannt, der aus mehreren miteinander in Zinkenringsegmentverbindung stehenden Zinkenringsegmenten gemäß dem Oberbegriff des Anspruchs 1 besteht. Da der Zinkenring mit den Zinkenringsegmenten im Betrieb des Rotors rotiert und zunehmend auch das Gewicht von landwirtschaftlichen Arbeitseinrichtungen in Bezug auf deren Wirtschaftlichkeit und Effizienz ein Rolle spielt, ist es wünschenswert, die Zinkenringsegmente so herzustellen, dass diese ein möglichst geringes Gewicht aufweisen.

Der Erfindung liegt daher die Aufgabe zugrunde, ein gemäß dem Oberbegriff des Anspruchs 1 ausgebildetes Zinkenringsegment für einen Rotor einer landwirtschaftlichen Arbeitseinrichtung so weiterzuentwickeln, dass dessen Gewicht reduziert ist.

Dies wird mit einem Zinkenringsegment gemäß Anspruch 1 erreicht. Weiterbildungen der Erfindung sind in den abhängigen Ansprüchen definiert.
Gemäß der Erfindung weist ein Zinkenringsegment für einen Rotor einer landwirtschaftlichen Arbeitseinrichtung eine kreisbogenförmige Basiseinheit vorbestimmter Bogenlänge auf. Die Basiseinheit definiert einen Innenbogen zur Montage auf einer Basistrommel des Rotors und einen Außenbogen, an dem eine Mehrzahl von Zinken radial vorstehen. An einem ersten Bogenlängsende der Basiseinheit sind erste Verbindungsmittel vorgesehen. An einem dem ersten Bogenlängsende entgegengesetzten zweiten Bogenlängsende der Basiseinheit sind zweite Verbindungsmittel vorgesehen. Die zweiten Verbindungsmittel sind als funktionales Gegenstück zu den ersten Verbindungsmitteln zum Herstellen einer Zinkenringsegmentverbindung ausgebildet. Das Zinkenringsegment zeichnet sich dadurch aus, dass die Basiseinheit zumindest in einem Teilabschnitt ihrer Bogenlänge als Hohlteil ausgebildet ist.
Durch die zumindest teilweise Ausbildung als Hohlteil kann das Zinkenringsegment bei Gewährleistung einer gewünschten Stabilität mit gegenüber einem durchgehend als Vollteil ausgebildeten Zinkenringsegment reduziertem Gewicht hergestellt werden.

Gemäß der Erfindung weist die Basiseinheit zwei kreisbogenförmige Halbschalen auf, die aneinandergesetzt und so geformt sind, dass die beiden Halbschalen zumindest in dem Teilabschnitt der Bogenlänge der Basiseinheit zwischen einander den Hohlraum definieren. Die Erfindung ermöglicht es, besonders einfach und schnell die Hohlteilform der Basiseinheit zu realisieren.
Bevorzugt sind die beiden Halbschalen spiegelbildlich identisch ausgebildet, wodurch sich der Fertigungsaufwand für die Basiseinheit weiter reduziert.

Gemäß einer weiteren Ausführungsform der Erfindung sind die beiden Halbschalen so ausgebildet, dass sie außenbogenseitig aneinander anliegend eine geschlossene Fläche bilden und innenbogenseitig zumindest in dem Teilabschnitt der Bogenlänge der Basiseinheit mit Abstand voneinander verlaufen. Bevorzugt ist dabei jede Zinke von zwei außenbogenseitig aneinandergesetzten Zinkenabschnitten der beiden Halbschalen gebildet und somit sehr stabil realisiert.

Durch die außenbogenseitig geschlossene Fläche wird vorteilhaft ein in den Hohlraum Eindringen von Erntegut vermieden. Ferner wird durch das außenbogenseitig aneinander Anliegen der Halbschalen ein geeigneter Bereich zum miteinander Verbinden der Halbschalen bereitgestellt. Durch die Ausgestaltung der Basiseinheit mit den innenbogenseitig voneinander beabstandeten Halbschalen weist die Basiseinheit in diesem Teilabschnitt der Bogenlänge eine relativ große Breite auf, so dass sie bei der Montage auf der Basistrommel eine relativ große Teilfläche von deren Mantelfläche überspannt und somit quasi mit großer Aufstandsfläche relativ verkippsicher montierbar ist.

Gemäß noch einer Ausführungsform der Erfindung ist an jeder Zinke an einer Vorlaufkante (einer bei Rotation des Rotors vorlaufenden Kante) dieser ein insbesondere kantenverbreiterndes Verstärkungselement mittels z.B. Laserschweißens oder MAG-Schweißens angebracht. Damit können die Zinken des Zinkenringsegments noch stabiler und verschleißfester ausgeführt sein.

Das Verstärkungselement ist bevorzugt als Blechstreifen aus einem Stahl mit einer Streckgrenze von mindestens 355 N/mm² hergestellt. Als Stahl kommt hierbei bevorzugt z.B. S 355 MC oder auch z.B. verschleißfester Stahl (wie z.B. unter dem Handelsnamen HARDOX® von der Firma SSAB angeboten) in Betracht.

Gemäß noch einer weiteren Ausführungsform der Erfindung umgreift das Verstärkungselement die beiden Halbschalen außenbogenseitig an einem Zinkenfuß der Zinke. Damit können sowohl eine geeignete Positionierung beim Anbringen des Verstärkungselements als auch eine zusätzliche Stabilisierung des Zusammenhalts der Halbschalen und der Position des Verstärkungselements an deren Zinkenabschnitten erreicht werden.

Gemäß einer Ausführungsform der Erfindung sind die beiden Halbschalen jeweils als Blechumformteil, insbesondere als Prägeteil oder als Tiefziehteil, ausgebildet. Damit lässt sich die Fertigung der Basiseinheit noch weiter vereinfachen und können z.B. in einem Pressenhub mit einem entsprechenden Werkzeug beide Halbschalen zeitsparend gleichzeitig hergestellt werden. Durch die Ausbildung als Blechumformteil lassen sich insbesondere auch eine hohe Genauigkeit, eine wiederhohlbare Qualität und enge Toleranzen für die Halbschalen gewährleisten.

Gemäß noch einer Ausführungsform der Erfindung ist in die Halbschalen im Bereich jeder Zinke eine Sicke eingeformt, so dass ein optimaler Kraftfluss von der Zinke in den Kreisbogen der Basiseinheit definiert bzw. realisierbar ist. Damit lässt sich die Stabilität der jeweiligen Zinken vorteilhaft weiter erhöhen.

Bevorzugt sind die beiden Halbschalen außenbogenseitig mittels z.B. Laserschweißens, Punktschweißens (Widerstandsschweißens) oder MAG-Schweißens miteinander verschweißt. Ein solcher Schweißprozess lässt sich mit hoher Wiederhohlbarkeit hinsichtlich Genauigkeit und Qualität realisieren. Laserschweißen und Punktschweißen bieten dabei insbesondere den Vorteil eines geringen Schweißverzuges der Halbschalen.

Im Fazit lassen sich gemäß den Ausführungsformen der Erfindung bei wenigen Fertigungsschritten und hohem Gleichteileumfang geringe Fertigungszeiten und hohe Durchlaufgeschwindigkeiten bei der Herstellung von erfindungsgemäßen Zinkenringsegmenten realisieren. Zudem lässt sich mit der erfindungsgemäßen Realisierung der Zinken auch eine Optimierung von deren Topologie zum Fördern und/oder Schneiden des Erntegutes durchführen.

Durch die Erfindung wird außerdem ein Zinkenring für einen Rotor einer landwirtschaftlichen Arbeitseinrichtung bereitgestellt, wobei der Zinkenring mehrere miteinander in Zinkenringsegmentverbindung stehende bzw. verbundene Zinkenringsegmente gemäß einer, mehreren oder allen zuvor beschriebenen Ausführungsformen der Erfindung in jeder denkbaren Kombination aufweist. Zudem wird durch die Erfindung ein Rotor für eine landwirtschaftliche Arbeitseinrichtung mit mehreren erfindungsgemäßen Zinkenringen bereitgestellt, die auf eine Mantelfläche einer kreiszylindrischen Basistrommel des Rotors axial der Basistrommel voneinander beabstandet aufgespannt sind.

Die Erfindung umfasst ausdrücklich auch solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren beschrieben.
- Fig. 1: zeigt eine perspektivische Ansicht eines Zinkenringsegments gemäß einer Ausführungsform der Erfindung.
- Fig. 2: zeigt eine Seitenansicht einer ersten Halbschale einer Basiseinheit des Zinkenringsegments von Fig. 1.
- Fig. 3: zeigt eine Seitenansicht einer zweiten Halbschale der Basiseinheit des Zinkenringsegments von Fig. 1.
- Fig. 4: zeigt eine Seitenansicht mehrerer in Zinkenringsegmentverbindung miteinander stehender Zinkenringsegmente von Fig. 1.
- Fig. 5: zeigt eine perspektivische vergrößerte Ansicht einer Verbindungsstelle zweier Zinkenringsegmente von Fig. 4.

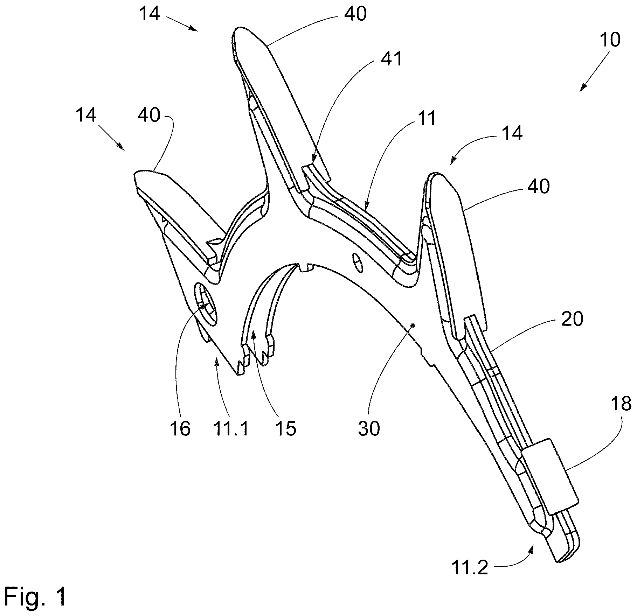

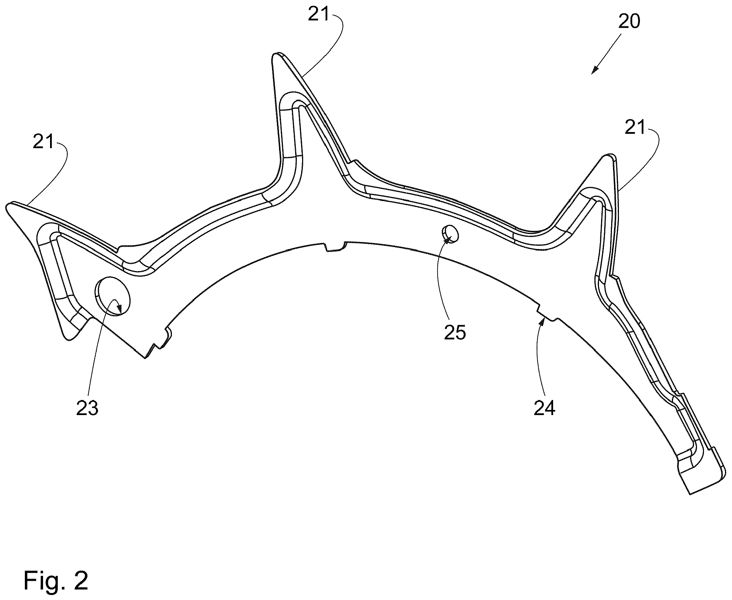

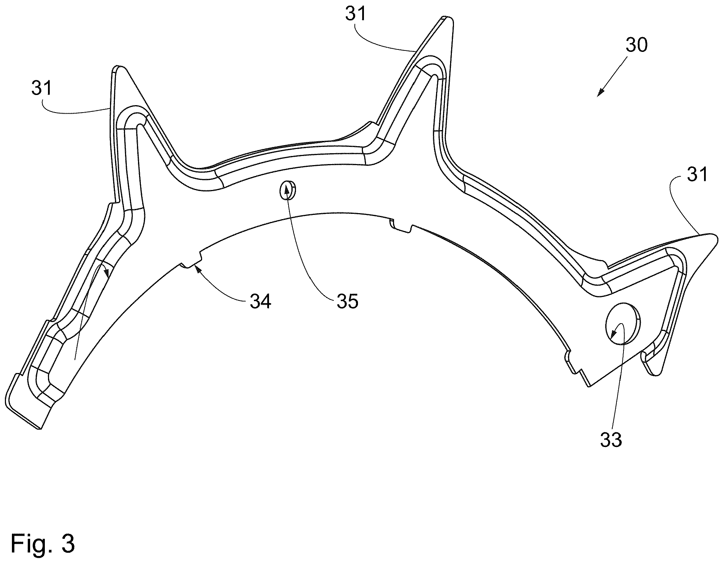

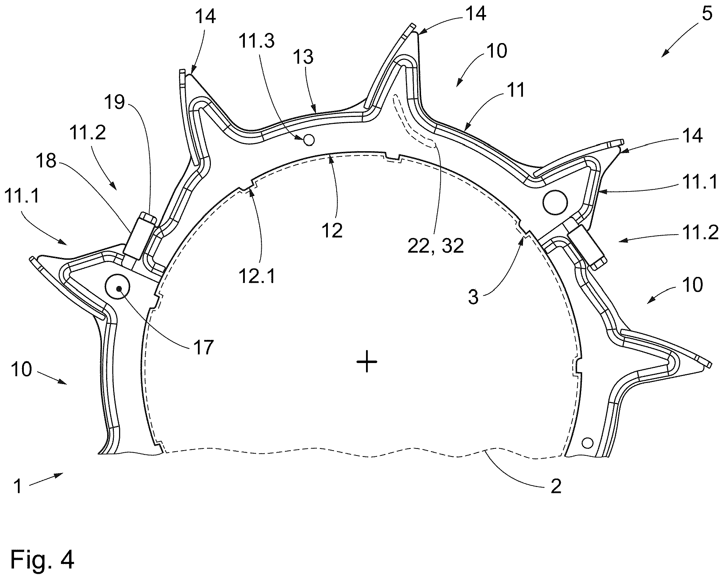

Im Folgenden wird unter Bezugnahme auf die Figuren 1 bis 5 ein Zinkenringsegment 10 eines Zinkenrings 5 für einen Rotor 1 (in Fig. 4 gestrichelt dargestellt) einer landwirtschaftlichen Arbeitseinrichtung (nicht vollständig dargestellt und nicht separat bezeichnet) beschrieben werden.

Der Rotor 1 dient zum Fördern und/oder Schneiden von stengelartigem Erntegut in der z.B. als Maisgebiss, Presse oder als Ladewagen ausgebildeten Arbeitseinrichtung. Der Rotor 1 weist eine kreiszylindrische Basistrommel 2 auf, auf deren Mantelfläche mehrere Zinkenringe 5 (in Fig. 4 ist nur ein Zinkenring 5 sichtbar) axial der Basistrommel 2 voneinander beabstandet aufgespannt sind. Jeder Zinkenring 5 ist dabei von drei identischen miteinander in Zinkenringsegmentverbindung stehenden bzw. verbundenen Zinkenringsegmenten 10 gebildet.

Jedes Zinkenringsegment 10 weist eine kreisbogenförmige Basiseinheit 11 vorbestimmter Bogenlänge (hier die Bogenlänge eines Drittelkreises) auf. Die Basiseinheit 11 definiert einen Innenbogen 12 zur Montage auf der Mantelfläche der Basistrommel 2 des Rotors 1 und einen Außenbogen 13, an dem eine Mehrzahl von Zinken 14 (hier drei) radial vorstehen.

Die Basiseinheit 11 weist zwei kreisbogenförmige Halbschalen 20, 30 auf, die aneinandergesetzt und so geformt sind, dass die beiden Halbschalen 20, 30 zumindest in einem Teilabschnitt der Bogenlänge der Basiseinheit 11 zwischen einander einen Hohlraum 15 definieren. Dadurch ist die Basiseinheit 11 zumindest in diesem Teilabschnitt ihrer Bogenlänge als Hohlteil ausgebildet.

Die beiden Halbschalen 20, 30 sind jeweils als Blechumformteil wie insbesondere als Prägeteil oder als Tiefziehteil ausgebildet. Die beiden Halbschalen 20, 30 sind vorzugsweise spiegelbildlich identisch geformt, so dass sie ein rechtes und ein linkes Teil der Basiseinheit 11 definieren. Die beiden Halbschalen 20, 30 sind mittels Blechumformung insbesondere so geformt, dass sie außenbogenseitig aneinander anliegend eine geschlossene Fläche bilden und innenbogenseitig zumindest in dem Teilabschnitt der Bogenlänge der Basiseinheit 11 mit Abstand voneinander verlaufen, wie in Fig. 1 gezeigt.

Durch diese Ausgestaltung der Basiseinheit 11 mit den innenbogenseitig voneinander beabstandeten Halbschalen 20, 30 weist die Basiseinheit 11 in diesem Teilabschnitt der Bogenlänge eine relativ große Breite auf, so dass sie bei der Montage auf der Basistrommel 2 eine relativ große Teilfläche von deren Mantelfläche überspannt und somit quasi mit großer Aufstandsfläche relativ verkippsicher montierbar ist.

Jede Zinke 14 des Zinkenringsegments 10 ist von zwei aneinandergesetzten Zinkenabschnitten 21, 31 der beiden Halbschalen 20, 30 gebildet. In die Halbschalen 20, 30 kann im Bereich jeder Zinke 14 eine Sicke 22, 32 (siehe Fig. 4, nur eine Sicke 22, 32 ist gestrichelt dargestellt) eingeformt sein, so dass im Betrieb des Rotors 1 ein optimaler Kraftfluss von der jeweiligen Zinke 14 in den Kreisbogen der Basiseinheit 11 definiert bzw. realisierbar ist.

Die beiden Halbschalen 20, 30 des Zinkenringsegments 10 sind außenbogenseitig mittels z.B. Laserschweißens, Punktschweißens (Widerstandsschweißens) oder MAG-Schweißens sowohl im Bereich der Zinken 14 als auch im Bereich des Kreisbogens bzw. Außenbogens 13 miteinander verschweißt. Die beiden Halbschalen 20, 30 können ebenso durch andere Fügeverfahren, wie z.B. Kleben oder sogenanntes Durchsetzfügen, miteinander verbunden werden.

An jeder Zinke 14 ist an einer Vorlaufkante (einer bei Rotation des Rotors 1 vorlaufenden Kante) ein kantenverbreiterndes Verstärkungselement 40 mittels z.B. Laserschweißens oder MAG-Schweißens angebracht. Das Verstärkungselement 40 weist eine U-förmige Aussparung 41 (siehe Fig. 1) auf, mit welcher das Verstärkungselement 40 die beiden Halbschalen 20, 30 außenbogenseitig an einem Zinkenfuß der jeweiligen Zinke 14 umgreift.

Das Verstärkungselement 40 ist als Blechstreifen aus einem Stahl mit einer Streckgrenze von mindestens 355 N/mm² hergestellt. Als Stahl kommt hierbei z.B. S 355 MC oder auch z.B. verschleißfester Stahl (wie z.B. unter dem Handelsnamen HARDOX® von der Firma SSAB angeboten) in Betracht. Somit bildet das Verstärkungselement 40 an jeder Zinke 14 ein verstärkendes Verschleißblech.

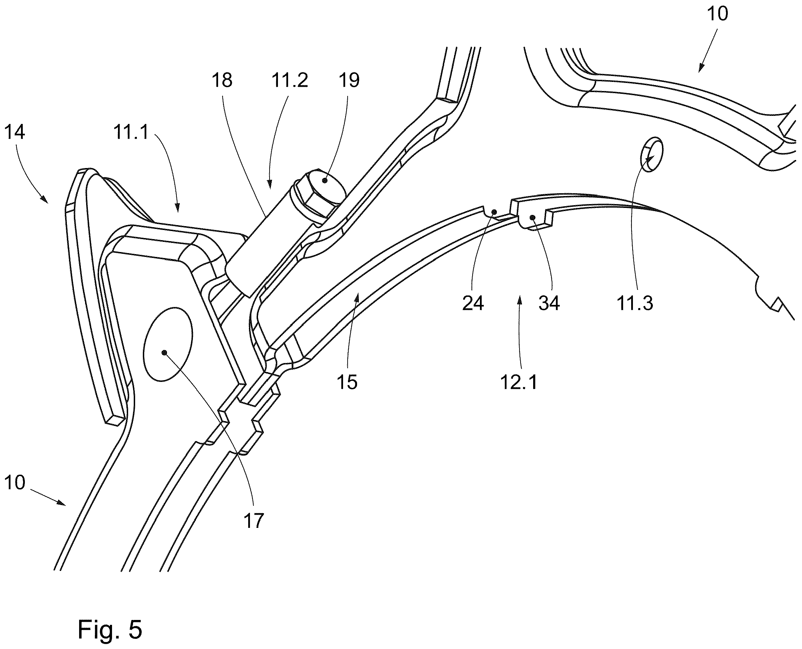

An einem ersten Bogenlängsende 11.1 der Basiseinheit 11 sind erste Verbindungsmittel mit einem sich durch beide Halbschalen 20, 30 erstreckenden Durchgang 16 vorgesehen. Der Durchgang 16 ist dabei von zueinander fluchtenden jeweiligen Durchgangslöchern 23 bzw. 33 in den Halbschalen 20, 30 gebildet. Die ersten Verbindungsmittel umfassen außerdem einen Bolzen 17 (siehe Fig. 4 und Fig. 5), in den quer eine Gewindebohrung (nicht gezeigt) eingebracht ist und der in den Durchgang 16 eingesetzt ist, so dass sich die Gewindebohrung in dem Hohlraum 15 zwischen den beiden Halbschalen 20, 30 befindet. Der Bolzen 17 ist dabei längs so bemessen, dass er im in den Durchgang 16 eingesetzten Zustand bündig mit den seitlichen Außenflächen der beiden Halbschalen 20, 30 der Basiseinheit 11 abschließt.

An einem dem ersten Bogenlängsende 11.1 entgegengesetzten zweiten Bogenlängsende 11.2 der Basiseinheit 11 sind zweite Verbindungsmittel mit einer Rohrhülse 18 vorgesehen, welche mittels z.B. Laserschweißens oder MAG-Schweißens außenbogenseitig längsseits an die Basiseinheit 11 angeschweißt ist. Am zweiten Bogenlängsende 11.2 der Basiseinheit 11 laufen die beiden Halbschalen 20, 30 zusammen, so dass in diesem Teilabschnitt (am zweiten Bogenlängsende 11.2) der Bogenlänge der Basiseinheit 11 der Hohlraum 15 ausläuft und die Basiseinheit 11 eine geringere Breite als am ersten Bogenlängsende 11.1 aufweist. Die zweiten Verbindungsmittel umfassen außerdem eine Gewindeschraube 19 (siehe Fig. 4 und Fig. 5), welche in die Rohrhülse 18 einsetzbar ist. Alternativ zur angeschweißten Rohrhülse 18 kann die Rohrhülse 18 auch beim Formen der Halbschalen 20, 30 mit ausgeformt werden, so dass die Rohrhülse 18 bereits beim Zusammenfügen der Halbschalen 20, 30 als integrales Teil der Halbschalen 20, 30 gebildet wird.

Zum Herstellen einer Zinkenringsegmentverbindung zwischen zwei Zinkenringsegmenten 10, 10 wird, wie in Fig. 4 und Fig. 5 gezeigt, das zweite Bogenlängsende 11.2 des einen Zinkenringsegments 10 in das erste Bogenlängsende 11.1 (in den Hohlraum 15) des anderen Zinkenringsegments 10 eingeschoben. Dann wird die Gewindeschraube 19 in die Rohrhülse 18 des einen Zinkenringsegments 10 eingeführt und in das Gewindeloch des Bolzens 17 des anderen Zinkenringsegments 10 eingeschraubt. Somit sind die zweiten Verbindungsmittel (Rohrhülse 18 und Gewindeschraube 19) als funktionales Gegenstück zu den ersten Verbindungsmitteln (Durchgang 16 und Bolzen 17) zum Herstellen der Zinkenringsegmentverbindung zwischen zwei Zinkenringsegmenten 10, 10 ausgebildet.

Wie in den Figuren 1 bis 5 ersichtlich, weist die Basiseinheit 11 am Innenbogen 12 eine Mehrzahl von Mitnehmern 12.1 auf, welche bei der Montage des Zinkenringsegments 10 auf der Mantelfläche der Basistrommel 2 in komplementäre Längsnuten 3 in der Mantelfläche der Basistrommel 2 eingreifen, um eine Rotationskraftübertragung von der Basistrommel 2 auf den Zinkenring 5 zu gewährleisten. Die Mitnehmer 12.1 sind dabei jeweils von zwei zueinander fluchtenden Vorsprüngen 24 bzw. 34 der beiden Halbschalen 20, 30 gebildet.
Durch vorzugsweise unterschiedlich ausgestaltete Mitnehmer 12.1, die nur in komplementäre Ausnehmungen an der Basistrommel 2 passen, kann die Einbaulage bzw. Position der Zinkenringsegmente 10 auf der Basistrommel 2 vordefiniert bzw. vorgegeben werden. Dadurch kann die Umfangslage der Zinken 14 als auch der Abstand zu axial benachbart angeordneten Zinkenringen festgelegt werden.
Die Basiseinheit 11 weist außerdem einen Positionierdurchgang 11.3 auf, welcher sich quer durch beide Halbschalen 20, 30 erstreckt und welcher zum insbesondere axialen Positionieren des Zinkenringsegments 10 bzw. des Zinkenrings 5 auf der Basistrommel 2 dient. Der Positionierdurchgang 11.3 ist dabei von zueinander fluchtenden jeweiligen Durchgangslöchern 25 bzw. 35 in den Halbschalen 20, 30 gebildet.

Schließlich bleibt noch zu erwähnen, dass im Betrieb des Rotors 1 die seitlichen Außenflächen der beiden Halbschalen 20, 30 der Basiseinheit 11 durch ihren bündigen und glatten Übergang von Zinkenringsegment 10 zu Zinkenringsegment 10 des Zinkenrings 5 jeweilige Anlageflächen bzw. Schleifflächen für mit dem Rotor 1 zusammenwirkende Abstreifer (nicht gezeigt) bilden können.

### Bezugszeichenliste

- 1: Rotor
- 2: Basistrommel
- 3: Längsnut
- 5: Zinkenring
- 10: Zinkenringsegment
- 11: Basiseinheit
- 11.1: Bogenlängsende
- 11.2: Bogenlängsende
- 11.3: Positionierdurchgang
- 12: Innenbogen
- 12.1: Mitnehmer
- 13: Außenbogen
- 14: Zinke
- 15: Hohlraum
- 16: Durchgang
- 17: Bolzen
- 18: Rohrhülse
- 19: Gewindeschraube
- 20: Halbschale
- 21: Zinkenabschnitt
- 22: Sicke
- 23: Durchgangsloch
- 24: Vorsprung
- 25: Durchgangsloch
- 30: Halbschale
- 31: Zinkenabschnitt
- 32: Sicke
- 33: Durchgangsloch
- 34: Vorsprung
- 35: Durchgangsloch
- 40: Verstärkungselement
- 41: Aussparung

## Patentansprüche

1. Zinkenringsegment (10) für einen Rotor (1) einer landwirtschaftlichen Arbeitseinrichtung, aufweisend:
eine kreisbogenförmige Basiseinheit (11) vorbestimmter Bogenlänge, wobei die Basiseinheit (11) einen Innenbogen (12) zur Montage auf einer Basistrommel (2) des Rotors (1) und einen Außenbogen (13) definiert, an dem eine Mehrzahl von Zinken (14) radial vorstehen,
wobei an einem ersten Bogenlängsende (11.1) der Basiseinheit (11) erste Verbindungsmittel (16, 17) und an einem dem ersten Bogenlängsende (11.1) entgegengesetzten zweiten Bogenlängsende (11.2) der Basiseinheit (11) zweite Verbindungsmittel (18, 19) vorgesehen sind, und wobei die zweiten Verbindungsmittel (18, 19) als funktionales Gegenstück zu den ersten Verbindungsmitteln (16, 17) zum Herstellen einer Zinkenringsegmentverbindung ausgebildet sind,
wobei die Basiseinheit (11) zumindest in einem Teilabschnitt ihrer Bogenlänge als Hohlteil ausgebildet ist, **dadurch gekennzeichnet, dass** die Basiseinheit (11) zwei kreisbogenförmige Halbschalen (20, 30) aufweist, die aneinandergesetzt und so geformt sind, dass die beiden Halbschalen (20, 30) zumindest in dem Teilabschnitt der Bogenlänge der Basiseinheit (11) zwischen einander einen Hohlraum (15) definieren.

2. Zinkenringsegment (10) gemäß Anspruch 1, wobei die beiden Halbschalen (20, 30) spiegelbildlich identisch ausgebildet sind.

3. Zinkenringsegment (10) gemäß Anspruch 1 oder 2, wobei die beiden Halbschalen (20, 30) so ausgebildet sind, dass sie außenbogenseitig aneinander anliegend eine geschlossene Fläche bilden und innenbogenseitig zumindest in dem Teilabschnitt der Bogenlänge der Basiseinheit (11) mit Abstand voneinander verlaufen.

4. Zinkenringsegment (10) gemäß einem der Ansprüche 1 bis 3, wobei jede Zinke (14) von zwei aneinandergesetzten Zinkenabschnitten (21, 31) der beiden Halbschalen (20, 30) gebildet ist.

5. Zinkenringsegment (10) gemäß Anspruch 4, wobei an jeder Zinke (14) an einer Vorlaufkante dieser ein Verstärkungselement (40) angebracht ist.

6. Zinkenringsegment (10) gemäß Anspruch 5, wobei das Verstärkungselement (40) die beiden Halbschalen (20, 30) außenbogenseitig an einem Zinkenfuß der Zinke (14) umgreift.

7. Zinkenringsegment (10) gemäß einem der Ansprüche 1 bis 6, wobei die beiden Halbschalen (20, 30) jeweils als Blechumformteil ausgebildet sind.

8. Zinkenringsegment (10) gemäß Anspruch 7, wobei in die Halbschalen (20, 30) im Bereich jeder Zinke (14) wenigstens eine Sicke (22, 32) eingeformt ist, so dass ein Kraftfluss von der Zinke (14) in den Kreisbogen der Basiseinheit (11) definiert ist.

9. Zinkenringsegment (10) gemäß einem der Ansprüche 1 bis 8, wobei die beiden Halbschalen (20, 30) außenbogenseitig miteinander verbunden, insbesondere verschweißt, sind.

## Claims

1. A tine ring segment (10) for a rotor (1) of an agricultural implement, comprising:
an arcuate base unit (11) with a predetermined arc length, wherein the base unit (11) defines an inner arc (12) for mounting on a base roller (2) of the rotor (1) and an outer arc (13) on which a plurality of tines (14) protrude radially,
wherein a first longitudinal end of the arc (11.1) of the base unit (11) is provided with first connecting means (16, 17) and a second longitudinal end of the arc (11.2) of the base unit (11) which is opposite to the first longitudinal end of the arc (11.1) is provided with second connecting means (18, 19), and wherein the second connecting means (18, 19) are configured as a functional counterpart to the first connecting means (16, 17) in order to produce a tine ring segment connection,
wherein the base unit (11) is configured as a hollow part in at least a subsection of its arc length, **characterized in that** the base unit (11) comprises two arcuate half-shells (20, 30) which are placed together and shaped in a manner such that the two half-shells (20, 30) define a void (15) between each other at least in the subsection of the arc length of the base unit (11).

2. The tine ring segment (10) as claimed in claim 1, wherein the two half-shells (20, 30) are formed as identical mirror images.

3. The tine ring segment (10) as claimed in claim 1 or claim 2, wherein the two half-shells (20, 30) are formed in a manner such that they fit closely together to form a closed surface on the outside of the arc and on the inside of the arc, they are positioned at a distance from each other at least in the subsection of the arc length of the base unit (11).

4. The tine ring segment (10) as claimed in one of claims 1 to 3, wherein each tine (14) is formed from two tine sections (21, 31) of the two half-shells (20, 30) which are placed together.

5. The tine ring segment (10) as claimed in claim 4, wherein a reinforcing element (40) is applied to a leading edge of each tine (14).

6. The tine ring segment (10) as claimed in claim 5, wherein the reinforcing element (40) encompasses the two half-shells (20, 30) on the outside of the arc at a tine root of the tine (14).

7. The tine ring segment (10) as claimed in one of claims 1 to 6, wherein each of the two half-shells (20, 30) is formed as a pressed sheet metal part.

8. The tine ring segment (10) as claimed in claim 7, wherein at least one bead (22, 32) is pressed into the half-shells (20, 30) in the region of each tine (14), so that a flow of forces from the tine (14) into the arc of the base unit (11) is defined.

9. The tine ring segment (10) as claimed in one of claims 1 to 8, wherein the two half-shells (20, 30) are connected together on the outside of the arc, in particular by welding.

## Revendications

1. Segment d'anneau denté (10) pour un rotor (1) d'un équipement de travail agricole, comprenant :
une unité de base en arc de cercle (11) d'une longueur d'arc prédéterminée, l'unité de base (11) définissant un arc intérieur (12) pour le montage sur un tambour de base (2) du rotor (1) et un arc extérieur (13) sur lequel une pluralité de dents (14) font saillie radialement,
à une première extrémité longitudinale d'arc (11.1) de l'unité de base (11) étant prévus des premiers moyens de liaison (16, 17) et à une seconde extrémité longitudinale d'arc (11.2) de l'unité de base (11) opposée à la première extrémité longitudinale d'arc (11.1) étant prévus des moyens de liaison (18, 19), et les seconds moyens de liaison (18, 19) étant conformés en pièce antagoniste fonctionnelle des premiers moyens de liaison (16, 17) pour réaliser une liaison de segments d'anneau denté,
l'unité de base (11) étant conformée en pièce creuse au moins dans une portion partielle de sa longueur d'arc, **caractérisé en ce que** l'unité de base (11) comporte deux demi-coques en arc de cercle (20, 30) qui sont accolées et sont conformées de façon que, au moins dans la portion partielle de la longueur d'arc de l'unité de base (11), les deux demi-coques (20, 30) définissent entre elles un vide (15).

2. Segment d'anneau denté (10) selon la revendication 1, les deux demi-coques (20, 30) étant conformées de manière identique selon une symétrie en miroir.

3. Segment d'anneau denté (10) selon la revendication 1 ou 2, les deux demi-coques (20, 30) étant conformées de façon à former, côté arc extérieur, une surface fermée lorsqu'elles sont accolées et, côté arc intérieur, à s'étendre à distance l'une de l'autre au moins dans la portion partielle de la longueur d'arc de l'unité de base (11).

4. Segment d'anneau denté (10) selon une des revendications 1 à 3, chaque dent (14) étant formée par deux portions de dent accolées (21, 31) des deux demi-coques (20, 30).

5. Segment d'anneau denté (10) selon la revendication 4, un élément de renfort (40) étant disposé sur chaque dent (14) sur une arête avant.

6. Segment d'anneau denté (10) selon la revendication 5, l'élément de renfort (40) enserrant les deux demi-coques (20, 30), côté arc extérieur, au niveau d'un pied de dent de la dent (14).

7. Segment d'anneau denté (10) selon une des revendications 1 à 6, les deux demi-coques (20, 30) étant chacune conformées en pièce en tôle estampée.

8. Segment d'anneau denté (10) selon la revendication 7, dans les demi-coques (20, 30) étant ménagée, dans la zone de chaque dent (14) au moins une moulure (22, 32), de façon à définir un flux de forces de la dent (14) vers l'arc de cercle de l'unité de base (11).

9. Segment d'anneau denté (10) selon une des revendications 1 à 8, les deux demi-coques (20, 30) étant reliées entre elles, en particulier soudées, côté arc extérieur.
